# EUROPÄISCHE PATENTSCHRIFT

(11) **EP 1 362 760 B1**
(45) Veröffentlichungstag und Bekanntmachung des Hinweises auf die Patenterteilung: **11.03.2009**
(21) Anmeldenummer: 02405391.0
(22) Anmeldetag: 14.05.2002
(51) Int. Cl.: B62B 3/00

(54) **Dämpfungsvorrichtung für einen nicht motorisierten Wagen und Wagen**
Damping device for a non motorized trolley and trolley
Dispositif d'amortissement pour chariot non motorisé et chariot

(43) Veröffentlichungstag der Anmeldung: 19.11.2003
(73) Patentinhaber: Ellema AG, 8951 Fahrweid (CH)
(72) Erfinder: Müller-Roth, Peter W., 5430 Wettingen (CH); Dedato, Elia, 5430 Wettingen (CH)
(74) Vertreter: Rutz & Partner

(56) Entgegenhaltungen:
- US-A- 5 749 589
- PATENT ABSTRACTS OF JAPAN vol. 1997, no. 02, 28. Februar 1997 (1997-02-28) & JP 08 268462 A (NISSAN DIESEL MOTOR CO LTD), 15. Oktober 1996 (1996-10-15)
- PATENT ABSTRACTS OF JAPAN vol. 2000, no. 02, 29. Februar 2000 (2000-02-29) & JP 11 301490 A (ASAHI:KK), 2. November 1999 (1999-11-02)

## Beschreibung

Die Erfindung betrifft eine Dämpfungsvorrichtung für einen nicht motorisierten Wagen sowie einen mit dieser Dämpfungsvorrichtung versehenen nicht motorisierten Wagen nach dem Oberbegriff des Patentanspruchs 1 bzw. 9.

Für das Deponieren und/oder den Transport von Materialien und Gütern in Dienstleistungsbetrieben, beispielsweise Restaurants, Kantinen und Hotels, in Produktions- oder Verkaufsstätten, werden oft nicht motorisierte Wagen verwendet, wie sie beispielsweise in [1], Katalog 1999 der Firma ellema, CH-8951 Fahrweid gezeigt und beschrieben sind.

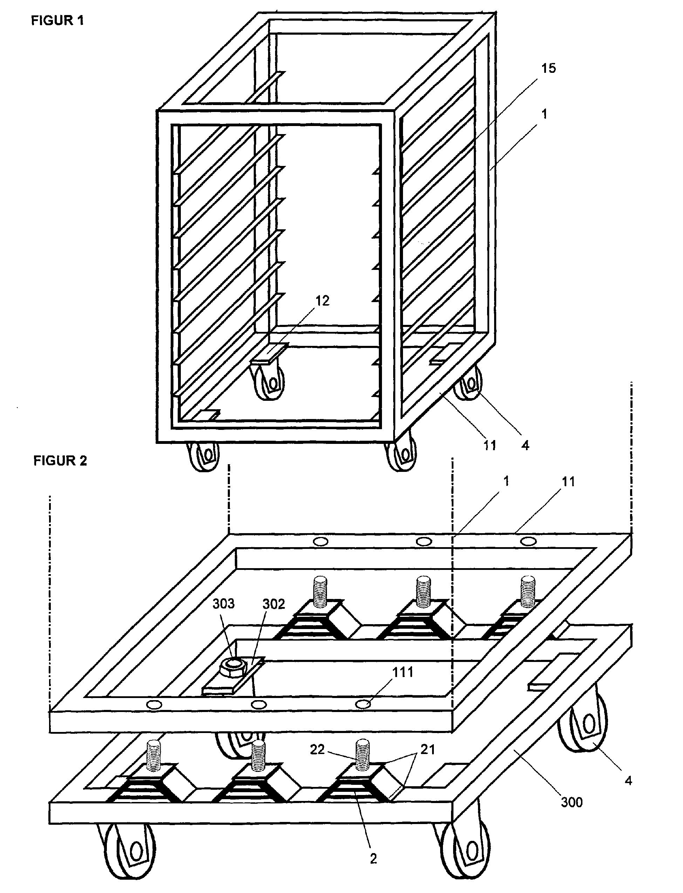

In [1] sind beispielsweise Abräumwagen, Servicestationswagen, beheizte Speisetransportwagen, Regalwagen (siehe nachstehend Figur 1), Rollwagen, Geschirrwagen, Schrankwagen, Verkaufswagen und Minibarwagen gezeigt und beschrieben.

Bei vielen Transportvorgängen ist wesentlich, dass keine Vibrationen oder Stösse auf die transportierten Materialien einwirken, wodurch unerwünschte Veränderungen, beispielsweise Verformungen von speziell hergerichteten Speisen (Torten, etc.) oder störende Geräusche, beispielsweise verursacht durch klapperndes Geschirr, auftreten können. Beim regelmässigen Transport schwerer Materialien über unebene Böden können zudem nach kurzer Betriebsdauer Schäden an den Laufrädern des Wagens auftreten.

Verschiedene der in [1] gezeigten Wagen sind daher gefedert, d.h. mit einer Dämpfungsvorrichtung versehen (siehe [1], Seite 2.2 "Plateaux-Abräumrolli"; [1], Seite 3.3 "beheizter Servierwagen"; oder [1], Seite 4.2 "Minibarwagen"), durch die Erschütterungen und Vibrationen, die beim Befahren unebener Böden auftreten können, gedämpft werden.

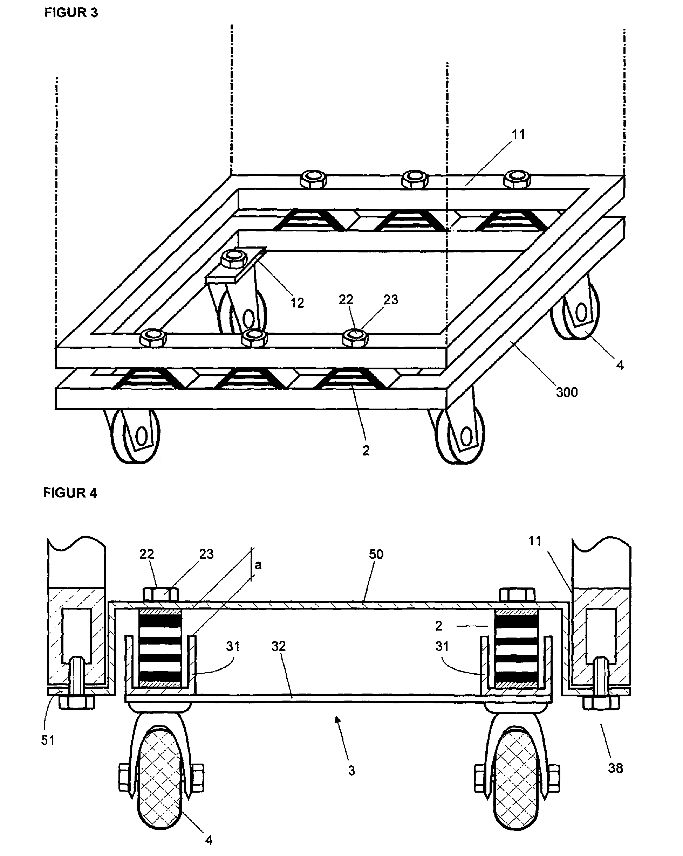

Figur 2 und Figur 3 zeigen die beim genannten Plateaux-Abräumrolli verwendete Dämpfungsvorrichtung, bei der ein mit den Laufrädern 4 des Wagens versehener Basisrahmen 300 über elastische Elemente 2 mit einem Abschlussrahmen 11 der zum Tragen von Materialien dienenden Tragstruktur 1 des Wagens verbunden ist.

Stösse, die beim Befahren eines unebenen Bodens durch die Laufräder 4 auf den Basisrahmen 300 einwirken, werden daher stark gedämpft auf die Tragstruktur 1 des Wagens übertragen.

Nachteilig bei dieser Dämpfungsvorrichtung ist jedoch, dass die verwendeten Dämpfungsmittel bzw. die elastischen Elemente 2 optisch in Erscheinung treten, was insbesondere in Verkaufslokalen unerwünscht ist. Die installierte Dämpfungsvorrichtung ist daher im Bedarfsfall mittels einer Verschalung abzudecken, wodurch ein zusätzlicher Aufwand verursacht wird.

Oben wurde erwähnt, dass die Verwendung einer Dämpfungsvorrichtung von den mit dem betreffenden Wagen zu transportierenden Materialien abhängig ist. Zur Reduktion der Kosten werden beispielsweise in einem Produktions- und/oder Dienstleistungsbetrieb daher oft nur diejenigen Wagen mit einer Dämpfungsvorrichtung ausgerüstet, bei denen dies zwingend erforderlich ist. Die Bauhöhen von Wagen mit und ohne Dämpfungsvorrichtung sind daher unterschiedlich, was optisch störend wirkt, entsprechend grosse, der Maximalhöhe angepasste Parkräume erfordert und gegebenenfalls Probleme beim Beladen und Entladen verursacht.

Die nachträgliche Installation der in Figur 3 gezeigten Dämpfungsvorrichtung, beispielsweise die Nachrüstung des in Figur 1 gezeigten Regalwagens, ist zudem mit erheblichem Material- und Zeitaufwand verbunden.

Aus der US 5'749'589 ist ein Gepäckwagen bekannt, der mit Dämpfungselementen ausgerüstet ist, die einerseits die Bauhöhe des Gepäckwagens vergrössern und andererseits optisch in Erscheinung treten.

Der vorliegenden Erfindung liegt daher die Aufgabe zugrunde, eine Dämpfungsvorrichtung für einen nicht motorisierten Wagen zu schaffen, welche nicht mit den beschriebenen Mängeln behaftet ist.

Insbesondere ist eine Dämpfungsvorrichtung zu schaffen, welche mit einfachen Massnahmen montierbar ist, keine störende Änderung der Bauhöhe des Wagens verursacht und nach deren Installation nicht störend in Erscheinung tritt.

Zudem sollen nicht motorisierte Wagen nachträglich mit geringem Aufwand mit einer erfindungsgemässen Dämpfungsvorrichtung ausrüstbar sein.

Ferner ist ein mit dieser Dämpfungsvorrichtung versehener nicht motorisierter Wagen anzugeben.

Diese Aufgabe wird mit einer Dämpfungsvorrichtung und einem Wagen gelöst, welche die in Anspruch 1 bzw. 10 angegebenen Merkmale aufweisen. Vorteilhafte Ausgestaltungen der Erfindung sind in weiteren Ansprüchen angegeben.

Die erfindungsgemässe Dämpfungsvorrichtung, die in nicht motorisierten Wagen installiert wird, weist Dämpfungselemente auf, mittels denen ein vorzugsweise rechteckig in sich geschlossener Abschlussrahmen einer zum Tragen von Materialien dienenden Tragstruktur mit einer mit Rädern versehenen Basisstruktur verbindbar ist. Erfindungsgemäss ist wenigstens ein Montageprofil vorgesehen, das mit dem Abschlussrahmen verbunden und derart geformt und montiert ist, dass die einerseits mit dem Montageprofil und andererseits mit der Basisstruktur verbundenen Dämpfungselemente innerhalb und zumindest teilweise auf gleicher Höhe des Abschlussrahmens angeordnet sind. Die Dämpfungsvorrichtung kann daher installiert werden, ohne dass die Höhe des Wagens ändert. Durch die Dämpfungsvorrichtung wird der sonst freie Raum innerhalb des an der Unterseite der Tragstruktur angeordneten Abschlussrahmens ausgefüllt, ohne dass die Abmessungen des Wagens ändern oder die Dämpfungselemente störend in Erscheinung treten.

Die Dämpfungsvorrichtung kann zudem mit geringem Aufwand installiert werden, so dass auch bereits im Gebrauch stehende Wagen mit einfachen Massnahmen mit einer erfindungsgemässen Dämpfungsvorrichtung nachgerüstet werden können.

Die Räder des mit der Dämpfungsvorrichtung versehenen Wagens befinden sich zudem nahezu in derselben Position wie bei den nicht mit einer Dämpfungsvorrichtung versehen Wagen, so dass die Stabilität des Wagens nach der Installation der Dämpfungsvorrichtung unverändert erhalten bleibt oder, aufgrund der Dämpfungswirkung sogar spürbar verbessert wird.

Durch die Dämpfungsvorrichtung werden Vibrationen und auf das Laufwerk einwirkende Schläge stark gedämpft, so dass störende Geräusche beim Verschieben des Wagens und schädliche Einwirkungen auf die transportierten Materialien und das Laufwerk vermieden werden.

In einer vorzugsweisen Ausgestaltung sind vier Dämpfungselemente vorgesehen, von denen jedes an einer Ecke des gegebenenfalls ein Hohlprofil aufweisenden Abschlussrahmens angeordnet ist. Beispielsweise werden die Dämpfungselemente und die Laufräder in einer Achse angeordnet.

Das Montageprofil weist vorzugsweise ein nach unten geöffnetes, der Aufnahme der Dämpfungselemente dienendes U-Profil auf, das gegebenenfalls mit nach aussen gerichteten Flanschen versehen ist, die an der Unterseite des Abschlussrahmens befestigt werden. Bei dieser Ausgestaltung des Montageprofils ist die installierte Dämpfungsvorrichtung daher kaum erkennbar.

Vorzugsweise sind zwei parallel zueinander angeordnete Montageprofile vorgesehen, die je mit zwei Dämpfungselementen verbunden und deren Abmessungen entsprechend der erforderlichen Stabilität gewählt sind.

Die Basisstruktur wird durch einen vorzugsweise in sich geschlossenen rechteckigen Basisrahmen gebildet, der gegebenenfalls aus miteinander verschraubten oder verschweissten, d.h. lösbar oder fest miteinander verbundenen Teilstücken besteht.

Zur Erhöhung der Stabilität der Basisstruktur weist vorzugsweise wenigstens eines der miteinander verbundenen Teilstücke ein Hohlprofil oder ein nach aussen geöffnetes, von der Basisstruktur wegweisendes U-Profil auf.

Zwischen Elementen des Montageprofils und der Basisstruktur ist vorzugsweise ein gegebenenfalls einstellbarer Abstand vorgesehen ist, durch den die maximale Kompression des zugeordneten Dämpfungselementes festgelegt wird, wodurch einerseits die Dämpfungselemente geschützt und andererseits ein Kippen des Wagens bei übermässiger Neigung der Tragstruktur verhindert wird.

Die Dämpfungselemente weisen an deren Ober- und Unterseite gegebenenfalls mittels Klebstoff befestigte Verbindungsmittel auf, mittels denen sie mit dem Montageprofil und der Basisstruktur verbindbar, gegebenenfalls verschraubbar sind. Beispielsweise weisen die Dämpfungselemente wenigstens einen gegebenenfalls mit Hohlräumen versehenen Kunststoffkörper oder wenigstens ein metallenes Federelement oder ein hydraulisches Dämpfungselement auf. Weitere Ausgestaltungen der Dämpfungselemente, die gegebenenfalls justierbar sind, sind in fachmännischer Weise einsetzbar.

Ein mit einer Dämpfungsvorrichtung versehener Wagen kann, wie einleitend beschrieben, zum Transport von beliebigen Materialien und Gütern verwendet werden. Die Tragstruktur und eine gegebenenfalls vorgesehene Verschalung werden der jeweiligen Anwendung entsprechend angepasst. Beispielsweise kann die Tragstruktur mit Tür- und Wandelementen, mittels denen beispielsweise ein Schrank gebildet wird, oder lediglich mit waagrecht angeordneten Leisten versehen sein, welche das Einschieben und Halten von Tablaren erlauben. Grundsätzlich umfassen erfindungsgemässe mit einer Dämpfungsvorrichtung versehene Wagen zumindest die Anwendungsmöglichkeiten ungefederter Wagen. Zudem können weitere, insbesondere fragile Güter in den erfindungsgemässen Wagen mit stark reduzierten Transportrisiken befördert werden.

Nachfolgend wird die Erfindung anhand von Zeichnungen näher erläutert. Dabei zeigt :
- Figur 1: einen bekannten zur Aufnahme von Tablaren dienenden Regalwagen,
- Figur 2: die Dämpfungsvorrichtung eines bekannten Wagens während der Montage,
- Figur 3: die Dämpfungsvorrichtung des Wagens von Figur 2 nach der Montage,
- Figur 4: eine erfindungsgemässe Dämpfungsvorrichtung in einem Seitenschnitt dargestellt,
- Figur 5: die Dämpfungsvorrichtung von Figur 4 unter Einwirkung einer Kraft F,
- Figur 6: die Dämpfungsvorrichtung von Figur 4 von oben gesehen, und
- Figur 7: die Dämpfungsvorrichtung von Figur 4 bzw. der mit der Dämpfungsvorrichtung versehene Wagen von unten gesehen.

Figur 1 zeigt einen bekannten ungefederten Regalwagen, der auf Rädern 4 manuell verschiebbar gelagert ist. Verschiedene Ausgestaltungen von Regalwagen sind beispielsweise in [1], Kapitel 2 gezeigt und beschrieben. Typisch für alle diese Wagen ist, dass sie eine der Aufnahme von Materialien dienende Tragstruktur 1 aufweisen, welche auf der Unterseite einen Abschlussrahmen 11 aufweisen.

Die Tragstruktur 1 des in Figur 1 gezeigten Regalwagens ist mit Leisten 15 versehen, welche das Einschieben und Halten von Tablaren erlauben (siehe [1], Seite 2.2, Bild "Plateaux-Abräumwagen").

Der rechteckig in sich geschlossenen Abschlussrahmen 11 ist mittels Montageplatten 12 mit Rädern 4 verbunden. Wesentlich für den Abschlussrahmen 11 ist, dass er über eine genügend hohe Festigkeit verfügt, um die zu transportierenden Materialien zu tragen und die Räder 4 stabil zu halten, so dass beim Verschieben des Wagens unter Last keine störenden Verformungen auftreten. Unter Berücksichtigung dieser Forderungen können daher verschiedene Formen und Abmessungen für den Abschlussrahmen 11 gewählt werden.

Einleitend wurde beschrieben, dass bei vielen Transportvorgängen wesentlich ist, dass keine Vibrationen oder Stösse auf die transportierten Materialien einwirken, wodurch unerwünschte Veränderungen, beispielsweise Verformungen von speziell hergerichteten Speisen (Torten, etc.) oder störende Geräusche, beispielsweise verursacht durch klapperndes Geschirr, auftreten können.

Verschiedene der in [1] gezeigten Wagen sind daher gefedert, d.h. mit einer Dämpfungsvorrichtung versehen. Figur 2 und Figur 3 zeigen die beim genannten Plateaux-Abräumrolli (siehe [1], Seite 2.2) verwendete Dämpfungsvorrichtung, bei der ein mit den Laufrädern 4 des Wagens versehener Basisrahmen 300 über elastische Elemente 2, nachstehend Dämpfungselemente, mit dem Abschlussrahmen 11 der Tragstruktur 1 verbunden ist. Figur 2 zeigt die Dämpfungsvorrichtung während und Figur 3 zeigt die Dämpfungsvorrichtung nach deren Montage.

Auf die Oberseite und Unterseite der Dämpfungselemente 2 sind Platten 21 geklebt, die mit Schrauben 22 versehen sind, welche oben durch Bohrungen 111 im Abschlussrahmen 11 und unten durch Bohrungen im Basisrahmen 300 geführt und anschliessend mit Schraubenmuttern 23 verschraubt werden.

Die Dämpfungselemente 2 weisen in der gezeigten vorzugsweisen Ausgestaltung einen mit Hohlräumen versehenen komprimierbaren Kunststoffkörper auf. Weitere Dämpfungselemente, beispielsweise metallene Federelemente, pneumatische oder hydraulische Dämpfungsmittel, die gegebenenfalls justierbar sind, sind ebenfalls verwendbar.

Stösse, die beim Befahren eines unebenen Bodens durch die Laufräder 4 auf den Basisrahmen 300 einwirken, werden daher stark gedämpft auf die Tragstruktur 1 des Wagens übertragen, wodurch die transportierten Materialien, aber auch das gesamte Laufwerk des Wagens geschützt wird.

Wie erwähnt, treten bei dieser Dämpfungsvorrichtung jedoch die verwendeten Dämpfungsmittel 2 störend in Erscheinung, weshalb oft eine Verschalung vorzusehen ist, die einen zusätzlichen Kostenaufwand verursacht. Ferner ist leicht ersichtlich, dass sich die Bauhöhe des Wagens ändert.

Figur 4 zeigt in Schnittdarstellung von der Seite eine erfindungsgemässe in einen Wagen eingebaute Dämpfungsvorrichtung, welche wenigstens ein mit dem Abschlussrahmen 11 verbundenes Montageprofil 50 aufweist, das derart geformt und montiert ist, dass die einerseits mit dem Montageprofil 50 und andererseits mit der Basisstruktur 3 verbundenen Dämpfungselemente 2 innerhalb und zumindest teilweise auf gleicher Höhe des Abschlussrahmen 11 angeordnet sind.

Die Dämpfungsvorrichtung kann daher installiert werden, ohne dass die Höhe des Wagens ändert. Durch die Dämpfungsvorrichtung wird der sonst freie Raum innerhalb des an der Unterseite der Tragstruktur 1 angeordneten Abschlussrahmens 11, der ein Hohlprofil aufweist, daher ausgefüllt, ohne dass die Abmessungen des Wagens ändern oder die Dämpfungselemente 2 störend in Erscheinung treten.

In der gezeigten vorzugsweisen Ausgestaltung weist das Montageprofil 50 ein nach unten geöffnetes, der Aufnahme der Dämpfungselemente 2 dienendes U-Profil auf, das mit nach aussen gerichteten Flanschen 51 versehen ist, die an der Unterseite des Abschlussrahmens 11 mittels Schrauben 38 befestigt sind. Der Abschlussrahmen 11 ist daher, unabhängig davon, ob eine Dämpfungsvorrichtung installiert ist, stets auf zumindest annähernd derselben Höhe.

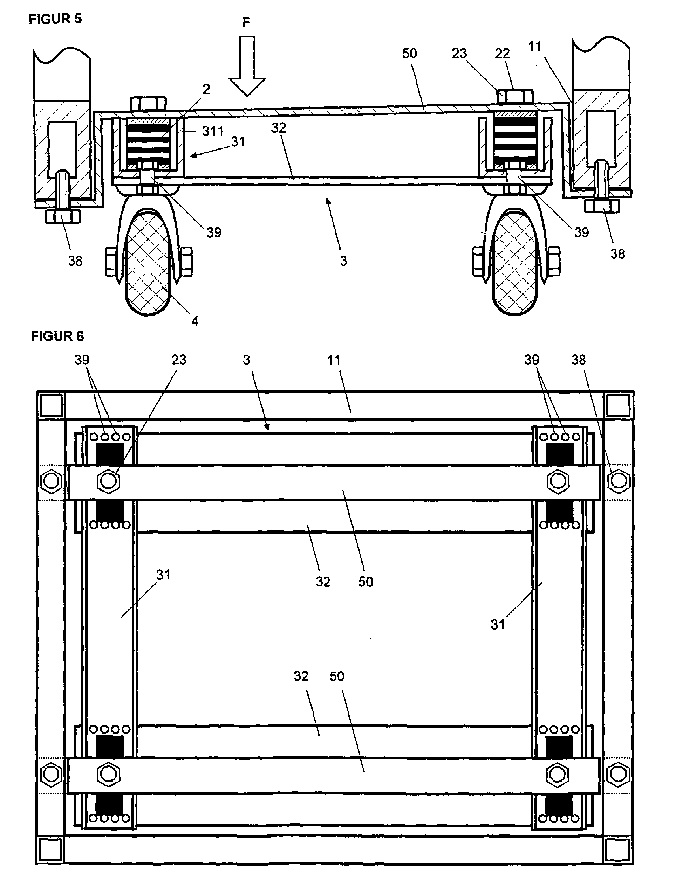

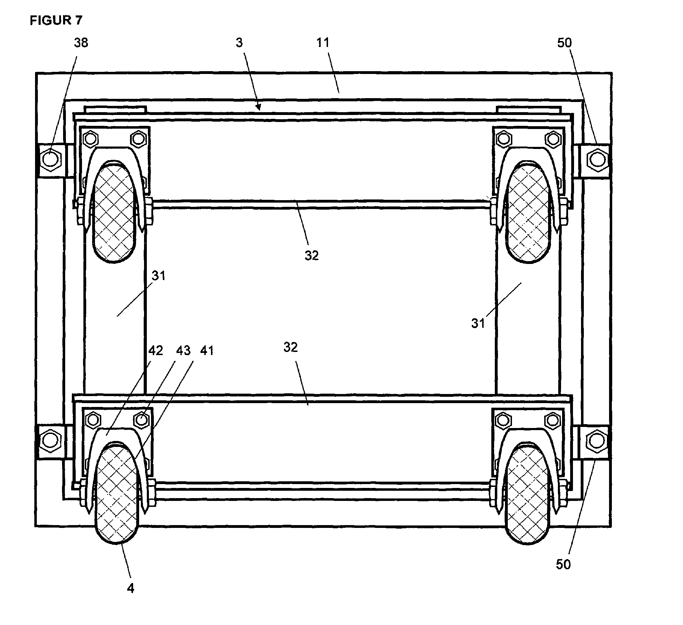

Wie in den Figuren 6 und 7 gezeigt, sind vorzugsweise zwei parallel zueinander angeordnete Montageprofile 50 vorgesehen, die je mittels zwei Dämpfungselementen 2 mit der Basisstruktur 3 verbunden sind. Jedes der Dämpfungselemente 2 ist nahe einer Ecke des Abschlussrahmens 11, über einem Rad 4 des Wagens angeordnet.

Aus Figur 4 ist ersichtlich, dass die Räder 4 des Wagens etwa in gleicher Position sind, wie bei dem in Figur 1 gezeigten Regalwagen. Dieser Wagen kann daher mit einfachen Massnahmen nachgerüstet werden. Dazu werden die Montageplatten 12 entfernt. Anschliessend wird die vorbereitete Dämpfungsvorrichtung eingesetzt und mit dem Abschlussrahmen 11 verschraubt.

Figur 6, in der die Dämpfungsvorrichtung von oben (mit einem Schnitt durch die Tragstruktur 1) dargestellt ist, zeigt ferner, dass die Basisstruktur 3 durch einen stabilen rechteckigen Basisrahmen gebildet wird, der aus mittels Schrauben und Schraubenmuttern 39 miteinander verschraubten Teilstücken 31, 32 besteht. Der Basisrahmen kann ferner aus miteinander verschweissten oder verschraubten Profilstücken gebildet werden, die beispielsweise ein T-, U- oder Hohlprofil aufweisen. In den in Figur 6 und 7 gezeigten Ausgestaltungen weisen die Teilstücke 31, 32 Rücken an Rücken liegende U-Profile auf, wodurch die Stabilität der Basisstruktur 3 entsprechend erhöht wird.

Figur 5 zeigt die Dämpfungsvorrichtung von Figur 4, nach exzentrischem, übermässigem Beladen der Tragstruktur 1, unter Einwirkung einer Kraft F. Dabei ist ersichtlich, dass das gezeigte linke Dämpfungselement 2 entsprechend dem in Figur 4 eingezeichneten Abstand a, d.h. bis zum gegenseitigen Auftreffen des Montageprofils 50 und des entsprechenden U-profilförmigen Teilstücks 31 komprimiert wurde. Eine weitere Komprimierung des Dämpfungselements 2, die gegebenenfalls dessen Schädigung oder ein Kippen des Wagens nach sich ziehen könnte, wird daher zuverlässig verhindert. Der Abstand a, durch den die zulässige Komprimierung der Dämpfungselemente 2 festgelegt wird, wird daher durch die Wahl des Profils der Teilstücke 31, bzw. durch die Länge der Flügelteile 311 des U-Profils bestimmt.

Selbstverständlich kann der Abstand a durch entsprechende Ausgestaltung verschiedener Elemente des Montageprofils 50 und/oder der Basisstruktur 3 vorbestimmt werden. Ferner sind weitere gegebenenfalls justierbare Distanzelemente einsetzbar.

Die erfindungsgemässe Dämpfungsvorrichtung und mit dieser Dämpfungsvorrichtung ausgerüstete Wagen wurden in bevorzugten Ausgestaltungen beschrieben und dargestellt. Es sind jedoch insbesondere die nachstehend beschriebenen Fortbildungen dieser Ausgestaltungen realisierbar. Insbesondere sind verschiedene Ausgestaltungen und Abmessungen der Vorrichtungsteile, insbesondere der Profilteile wählbar sowie verschiedene Fertigungsmaterialien, vorzugsweise Leichtmetalle, wie Aluminium, zu deren Herstellung verwendbar. Weiterhin können verschiedene Mittel zur Verbindung der Vorrichtungsteile verwendet werden. Ferner können die Positionen an denen die Verbindungsstellen vorgesehen werden, verschiedenartig gewählt werden. Selbstverständlich sind auch verschiedenartige Dämpfungselemente, Federelemente, pneumatische oder hydraulische Dämpfungselemente, welche die erforderlichen Abmessungen aufweisen, problemlos einsetzbar. Hinsichtlich des Einsatzes der nicht motorisierten Wagen sind insbesondere die in [1] beschriebenen aber, insbesondere aufgrund der installierten Dämpfungsvorrichtung, auch eine Vielzahl weiterer Anwendungen möglich.

## Patentansprüche

1. Dämpfungsvorrichtung für einen nicht motorisierten Wagen, mit Dämpfungselementen (2), mittels denen ein gegebenenfalls rechteckig in sich geschlossener Abschlussrahmen (11) einer zum Tragen von Materialien dienenden Tragstruktur (1) mit einer mit Rädern (2) versehenen Basisstruktur (3) verbunden ist, wobei wenigstens ein mit dem Abschlussrahmen (11) verbundenes Montageprofil (50) vorgesehen ist, das derart geformt und montiert ist, dass die einerseits mit dem Montageprofil (50) und andererseits mit der Basisstruktur (3) verbundenen Dämpfungselemente (2) innerhalb und zumindest teilweise auf gleicher Höhe des Abschlussrahmens (11) angeordnet sind, **dadurch gekennzeichnet, dass** das wenigstens eine Montageprofil (50) ein nach unten geöffnetes, der Aufnahme der Dämpfungselemente (2) dienendes U-Profil aufweist, das mit nach aussen gerichteten Flanschen (51) versehen ist, die an der Unterseite des Abschlussrahmens (11) befestigt sind.

2. Dämpfungsvorrichtung nach Anspruch 1, **dadurch gekennzeichnet, dass** vier Dämpfungselemente (2) vorgesehen sind, von denen jedes an einer Ecke des rechteckig in sich geschlossenen, gegebenenfalls ein Hohlprofil aufweisenden Abschlussrahmens (11), gegebenenfalls direkt über einem Rad (4) des Wagens, angeordnet ist.

3. Dämpfungsvorrichtung nach Anspruch 1 oder 2, **dadurch gekennzeichnet, dass** zwei parallel zueinander angeordnete Montageprofile (50) vorgesehen sind, die je mit zwei Dämpfungselementen (2) verbunden sind.

4. Dämpfungsvorrichtung nach einem der Ansprüche 1 bis 3, **dadurch gekennzeichnet, dass** die Basisstruktur (3) ein rechteckiger Basisrahmen ist, der gegebenenfalls aus miteinander verschraubten oder verschweissten Teilstücken (31, 32) besteht.

5. Dämpfungsvorrichtung nach Anspruch 4, **dadurch gekennzeichnet, dass** wenigstens eines der miteinander verbundenen Teilstücke (31, 32) ein Hohlprofil oder ein nach aussen geöffnetes, von der Basisstruktur (3) wegweisendes U-Profil aufweist.

6. Dämpfungsvorrichtung nach einem der Ansprüche 1 bis 5, **dadurch gekennzeichnet, dass** zwischen Elementen (311) des Montageprofils (50) und der Basisstruktur (3) ein gegebenenfalls einstellbarer Abstand (a) vorgesehen ist, durch den die maximale Kompression des zugeordneten Dämpfungselementes (2) festgelegt wird.

7. Dämpfungsvorrichtung nach einem der Ansprüche 1 bis 6, **dadurch gekennzeichnet, dass** die Dämpfungselemente (2) an der Oberseite und der Unterseite gegebenenfalls mittels Klebstoff befestigte Verbindungsmittel (21, 22) aufweisen, mittels denen sie mit dem Montageprofil (50) und der Basisstruktur (3) verbindbar, gegebenenfalls verschraubbar sind.

8. Dämpfungsvorrichtung nach einem der Ansprüche 1 bis 7, **dadurch gekennzeichnet, dass** die Dämpfungselemente (2) wenigstens einen gegebenenfalls mit Hohlräumen versehenen Kunststoffkörper, ein metallenes Federelement oder ein hydraulisches oder pneumatisches Dämpfungselement aufweisen.

9. Wagen mit einer Dämpfungsvorrichtung nach einem der Ansprüche 1 bis 8.

## Claims

1. Damping device for a non-motorized trolley, with damping elements (2), through which a terminating frame (11) of a support structure (1) serving for carrying materials is connected to a base structure (3) that is provided with wheels (2), which terminating frame (11) forms, if appropriate, a rectangular closed loop, with at least one mounting profile (50) connected to said terminating frame (11), which mounting profile (50) is formed and mounted in such a way that the damping elements (2), which are connected on the one hand to the mounting profile (50) and on the other hand to the base structure (3), are arranged within the terminating frame (11) and at least partially on the same height, **characterised in that** the at least one mounting profile (50) is formed as a U-profile opened downwards serving for receiving the damping elements (2), said mounting profile (50) comprises flanges (51) directed outwards, which are affixed on the lower side of the terminating frame (11).

2. Damping device according to claim 1, **characterised in that** four damping elements (2) are provided, each of which being arranged, if appropriate, directly above a wheel (4) of the trolley, on a corner of the terminating frame (11), which forms a rectangular closed loop and may comprise a hollow profile.

3. Damping device according to claim 1 or 2, **characterised in that** two mounting profiles (50) arranged in parallel to one another are provided which are connected to two damping elements (2) each.

4. Damping device according to one of the claims 1 - 3, **characterised in that** the base structure (3) is a rectangular base frame, which, if appropriate, consists of parts (31, 32) screwed or welded to one another.

5. Damping device according to claim 4, **characterised in that** at least one of the parts (31, 32), which are connected to one another, comprises a hollow profile or a U-profile opened outwards and extending away from the base structure (3).

6. Damping device according to one of the claims 1 - 5, **characterised in that** between the elements (311) of the mounting profile (50) and the base structure (3) an adjustable clearance (a) is provided, through which the maximum compression of the damping elements (2) is defined.

7. Damping device according to one of the claims 1 - 6, **characterised in that** damping elements (2) comprise connecting means (21, 22), that are, if appropriate, mounted by means of an adhesive, by means of which connecting means (21, 22) the damping elements (2) are connected, if appropriate, screwed, to the mounting profile (50) and to the base structure (3).

8. Damping device according to one of the claims 1 - 7, **characterised in that** the damping elements (2) comprise at least one plastic body, if appropriate provided with a cavity, a metal spring or a pneumatic or hydraulic damping element.

9. Trolley with a damping device according to one of the claims 1 - 8.

## Revendications

1. Dispositif d'amortissement pour un chariot non motorisé, avec des éléments d'amortissement (2), au moyen desquels un cadre de fermeture (11), éventuellement rectangulaire et fermé sur lui-même, d'une structure portante (1) servant au support de matériau est relié à une structure de base (3) munie de roues (2), au moins un profilé de montage (50) relié au cadre de fermeture (11) étant prévu lequel est formé et monté de sorte que les éléments d'amortissement (2) reliés d'une part avec le profilé de montage (50) et d'autre part avec la structure de base (3) soient disposés à l'intérieur et au moins partiellement à même hauteur que le cadre de fermeture (11) **caractérisé en ce qu'**au moins un profilé de montage (50) présente un profilé en U ouvert vers le bas et servant au logement des éléments d'amortissement (2), profilé qui est muni de brides (51) dirigées vers l'extérieur qui sont fixées sur la face inférieure du cadre de fermeture (11).

2. Dispositif d'amortissement selon la revendication 1, **caractérisé en ce qu'**il est prévu quatre éléments d'amortissement dont chacun est disposé à un angle du cadre de fermeture (11) rectangulaire, fermé sur lui-même, et présente éventuellement un profilé creux (11), le cas échéant directement au-dessus d'une roue (4) du chariot.

3. Dispositif d'amortissement selon la revendication 1 ou 2, **caractérisé en ce qu'**il est prévu deux profilés (50) de montage disposés parallèlement entre eux qui sont reliés chacun à deux éléments d'amortissement (2).

4. Dispositif d'amortissement selon l'une des revendications 1 à 3, **caractérisé en ce que** la structure de base (3) est un cadre de base rectangulaire qui se compose le cas échéant de pièces partielles soudées ou vissés entre elles (31 32).

5. Dispositif d'amortissement selon la revendication 4, **caractérisé en ce qu'**au moins l'une des pièces partielles (31, 32) reliées entre elles présente un profilé creux ou un profilé en U ouvert vers l'extérieur et détourné de la structure de base (3).

6. Dispositif d'amortissement selon l'une des revendications 1 à 5, **caractérisé en ce qu'**entre des éléments (311) du profilé de montage (50) et la structure de base (3), il est prévu une distance (a) éventuellement réglable qui permet de déterminer la compression maximale de l'élément d'amortissement associé (2).

7. Dispositif d'amortissement selon l'une des revendications 1 à 6, **caractérisé en ce que** les éléments d'amortissement (2) présentent sur la face supérieure et la face inférieure des moyens de connexion (21, 22) fixés éventuellement au moyen de colle par l'intermédiaire desquels ils peuvent être reliés le cas échéant être vissés au profilé de montage (50) et à la structure de base (3).

8. Dispositif d'amortissement selon l'une des revendications 1 à 6, **caractérisé en ce que** les éléments d'amortissement (2) présentent au moins corps en matière plastique munis éventuellement de cavités, un élément métallique de ressort ou un élément d'amortissement pneumatique ou hydraulique.

9. Chariot avec un dispositif d'amortissement selon l'une des revendications 1 à 8.
